# EUROPEAN PATENT SPECIFICATION

(11) **EP 1 837 098 B1**
(45) Date of publication and mention of the grant of the patent: **30.11.2011**
(21) Application number: 07075213.4
(22) Date of filing: 20.03.2007
(51) Int. Cl.: B21K 21/06, F16C 3/02, B60B 35/02, B23K 26/28, B23K 33/00

(54) **Manufacturing of a bent axle body with stubs**
Herstellung eines gebogenen Achskörpers mit Schenkeln
Fabrication d'un axe d'essieu courbé comportant des fusées

(30) Priority: 22.03.2006 NL 1031425
(43) Date of publication of application: 26.09.2007
(73) Proprietor: Weweler Nederland B.V., 7332 AP Apeldoorn (NL)
(72) Inventor: Aalderink, Derk Geert, 7245 NV Laren (Gld.) (NL)
(74) Representative: Houben, Christiaan Hein Willem Frans

(56) References cited:
- EP-A- 1 155 883
- EP-A- 1 439 081
- DD-A5- 201 981
- DE-A1- 10 060 312
- US-A1- 2003 192 185
- US-A1- 2005 062 341
- US-B1- 6 439 672

## Description

The invention relates to a method for manufacturing an axle body according to the preamble of claim 1. The vehicle wheels are mounted on the axle stub. Such a method is known from DE 100 60 312 A, wherein a straight axle body is shown with an axle stub welded to a widened end part.

The present invention relates in particular to a method for producing bent axle bodies which are provided with axle stubs. Such axle bodies are for example used in lorries and buses and, inter alia, have a bent shape in order to prevent the axle from coming into contact with the drive shaft. Bent hollow axle bodies are manufactured by bending an initially straight axle tube having a circular cross section. During this bending operation, the cross section is deformed. As a result, the cross section may become slightly oval at the end of the axle tube, which may cause problems when attaching the axle stub.

It is an object of the invention to provide a method which provides an improved connection between the bent axle body and the axle stub.

This object is achieved according to the invention, by a method according to claim 1.

By means of the method according to the invention, the cross section of the end of the axle body can be accurately matched to the cross section of the axle stub by expansion without requiring a machining operation in which axle body material is removed which would result in a decrease in the strength of the axle body. During expansion of the end of the axle body, there is indeed a reduction in the wall thickness, but this causes significantly less weakening than removal of material by machining. The oval shape of the end of the axle body is first eliminated before the axle stub is welded onto it. Surprisingly, expansion, in particular flaring, is a highly suitable method of eliminating the oval shape of the tube end in a simple manner.

In use, the vehicle axle is subjected to flexural loads. As a result, the axle is susceptible to a notch effect, which is disadvantageous for the fatigue strength. This also occurs in particular where the weld has been applied, due to the residual stresses in the material caused by welding. Preferably, the end section of the axle body is expanded up to an internal and an external diameter which are greater than those of the rest of the axle body. The increase in diameter by expansion results in an increase in the resistance to bending at the location of the circumferential weld, which, in use, leads to a decrease in stresses in the material of the axle during flexural loads. This decrease in stresses at least partially compensates for the increase in stress in the material at the location of the weld. Consequently, a vehicle axle with increased fatigue strength is obtained.

The invention furthermore relates to a vehicle axle according to claim 8. This aspect of the invention relates to a vehicle axle comprising an axle body, the axle body having a clamping region where, in the mounted state, the axle clamp engages in order to attach the axle to a longitudinal carrier of the vehicle. On either side of the vehicle, the axle is clamped against a longitudinal bearing arm which generally has the shape of a bearing spring which is hingedly connected to the vehicle chassis on one side and is connected to the chassis via a pneumatic spring (bellows) at the other end. The axle clamp generally comprises an axle pad with accommodating recess in which a section, the so-called clamping region, of the axle body is accommodated and, if desired, secured by welding. In the mounted state, the axle pad is clamped against the longitudinal bearing arm of the wheel axle suspension by means of U-shaped brackets which extend around the axle body. Viewed in the axial direction, the clamping region is at a distance from the end of the axle body. According to this aspect of the invention, the axle body is expanded at the location of the clamping region, preferably by flaring. This makes it possible to improve the fit of the clamping region of the axle body with respect to the axle pad. Furthermore, it is possible to make the two clamping regions fit exactly in line with one another.

An axle body with an expanded axle clamping region is known per se from DE 100 60 312. With this known vehicle axle, the axle clamping region is formed by one end of the axle tube and a tube part of the axle stub. The end of the axle tube is expanded in order to be welded to the widened end of the axle stub. One of the differences compared to the present invention is the fact that with the known structure, an axle clamping region with an increased diameter is provided, with the weld seam being in the axle clamping region between the points of engagement of the axle clamp, whereas this is not the case with the present invention and the axle body is expanded at a distance from the end.

The invention will be explained in more detail with reference to the drawing, in which:
Fig. 1 shows an axle assembly with a bent wheel axle;
Fig. 2 shows a section of a vehicle axle according to the invention;
Fig. 3 shows a section of a vehicle axle according to another aspect of the invention;
Fig. 4 shows a diagrammatic illustration of a flaring process; and
Fig. 5 shows a section of a vehicle axle according to a preferred embodiment of the invention.

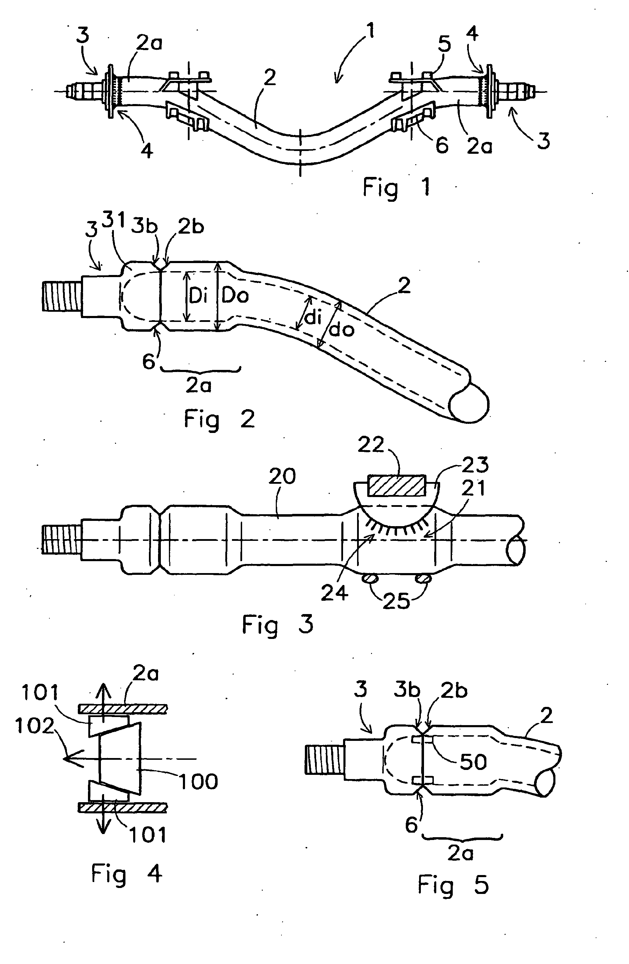

Fig. 1 shows a vehicle axle 1 comprising a bent axle body 2, onto the ends of which an axle stub 3 is welded. The axle stubs 3 are in each case connected to the end of the axle body 2 by means of a circumferential weld 4. The vehicle wheels are mounted on the axle stubs 3.

In the illustrated embodiment, in each case one axle pad 5 and one strap plate 6 are arranged near the end regions 2a of the axle body 2, by means of which the axle 1 can be clamped against the longitudinal bearing arm, in particular a bearing spring (not shown), by means of clamping brackets (not shown), in a manner known per se.

Fig. 2 shows a section of a bent axle body 2, with an axle stub 3 being arranged on the end. The axle body 2 is hollow, as has been illustrated by means of the dashed line. The axle body 2 has an end region 2a which has been expanded by means of flaring. Flaring is a method which is known per se for expanding tubular bodies. Fig. 4 shows an outline sketch of the way in which flaring could be carried out. A frustoconical element 100 is arranged in the end region 2a of the axle body 2. Subsequently, a number of expansion elements 101 with a conical inner surface are fitted. By pulling the conical element 100 axially outwards, as indicated by arrow 102, the expansion elements 101 are forced radially outwards by the wedge action of the conical element 100, as a result of which the end region 2a of the axle body 2 is expanded. After expansion, the end region 2a has a circular cross section with an accurately defined external diameter Dₒ and internal diameter Dᵢ (see Fig. 2), which in the case illustrated are greater than the internal diameter dᵢ and external diameter dₒ of the adjacent part of the axle tube 2. By means of the method illustrated in Fig. 4, an axle section is expanded cylindrically. However, it is also possible to expand, for example, the end of the axle body conically.

The axle stub 3 has a hollow portion 31 which has an internal diameter and an external diameter which substantially correspond to the internal and external diameters, Dᵢ and Dₒ, respectively, of the end region 2a. The end face 2b of the axle body 2 is preferably bevelled. The end face 3b of the hollow portion 31 of the axle stub is preferably also bevelled, so that a V-shaped groove 6 extending in the circumferential direction results when the hollow portion 31 of the axle stub 3 is positioned abuttingly against the end of the axle body. In this groove 6, a circumferential weld 4 is produced by means of orbital welding (see Fig. 1) in order to connect the axle stub 3 and the axle body 2 to one another. Due to their shape, bent axle bodies cannot be rotated about their centre axis at high speed, as a result of which friction welding, which is often used in practice for attaching an axle stub to a straight axle tube, cannot really be used. In that case, another welding method is preferred, preferably a welding method in which a welding head moves around the axle in an orbital fashion, preferably laser welding. Laser welding is a welding method which can produce good welded joints. However, the result which is obtained appears to depend to a large degree on how well the parts to be welded together fit together. Flaring appears to provide the desired precision in this respect, which makes it possible to weld axle stubs onto a bent axle body by means of laser welding. However, other welding methods producing good welded joints are also possible.

Fig. 3 shows a section of a straight axle body 20 having a clamping region 21. In the mounted state, the axle clamp engages on the clamping region 21 in order to attach the axle to a longitudinal support 22 of the vehicle. On either side of the vehicle, the axle is clamped against a longitudinal bearing arm 22, which generally has the shape of a bearing spring which is hingedly connected to the vehicle chassis on one side and is connected to the chassis via a pneumatic spring (bellows) at the other end. The axle clamp generally comprises an axle pad 23 with accommodating recess in which a section, the so-called clamping region 21, of the axle body 20 is accommodated. If desired, the edge of the axle is secured to the axle pad 23 by means of a weld 24. In the mounted state, the axle pad 23 is clamped against the longitudinal bearing arm 22 of the wheel axle suspension by means of U-shaped brackets 25 which extend around the axle body 20.

The axle body 20 is expanded at the location of the clamping region 21, preferably by flaring. In this case, the same principle is used as described earlier for expanding the end region of the axle body with reference to Fig. 4. Flaring makes it possible to improve the fit of the clamping region 21 of the axle body 20 with respect to the accommodating recess of the axle pad 23. Furthermore, it is possible to make the two clamping regions 21 of an axle body fit exactly in line with one another.

In a preferred embodiment, which is shown in Fig. 5, an auxiliary welding ring 50 is arranged on the inside of the end of the axle body 2. The auxiliary welding ring 50 extends beyond the end of the axle body 2, after which the hollow portion 31 of the axle stub 3 is arranged over the protruding portion of the auxiliary welding ring 50. Subsequently, the axle stub 3 is secured to the end of the axle body 2 by welding. In the field, the auxiliary welding ring 50 is also referred to as backing ring and ensures good root fusion preventing crater formation. It is also possible to attach the auxiliary welding ring on the inside on the end of the hollow portion of the axle stub first. The end of the axle body is then arranged over the protruding portion of the auxiliary welding ring and the axle stub is secured to the end of the axle body by welding.

## Claims

1. Method for manufacturing an axle body (2) which is provided with axle stubs (3) at the ends, **characterised by** the following steps:
- fist deforming a substantially straight tubular axle body to form a bent axle body (2),
- subsequently expanding the end regions (2a) at the ends of the axle body (2) in order to produce end regions (2a) having a circular cross section with an internal and an external diameter (Di, Do),
- subsequently placing the respective axle stubs (3) against the respective ends of the bent axle body (2), which axle stubs (3) are provided with a hollow portion (31) which is to be placed against the end of the axle body (2) and has an internal and an external diameter which substantially correspond to the internal (Di) and external diameters (Do) of the expanded end region (2a) of the axle body (2), and
- finally securing the axle stub (3) on the end of the axle body (2) on all sides by laser welding

2. Method according to claim 1, in which the axle is expanded by flaring.

3. Method according to claim 1 or 2, in which the end region (2a) of the axle body (2) is expanded up to an internal and an external diameter (Di, Do) which correspond to those of the rest of the axle body (2).

4. Method according to claim 1 or 2, in which the end region (2a) of the axle body (2) is expanded up to a internal and an external diameter (Di, Do) which are greater than those of the rest of the axle body (2).

5. Method according to one of the preceding claims, in which an auxiliary welding ring (50) is arranged on the inside of the end of the axle body (2), the auxiliary welding ring (50) protruding beyond the end, after which the hollow portion (31) of the axle stub (3) is arranged over the protruding portion of the auxiliary welding ring (50) and the axle stub (3) is secured to the end of the axle body (2) by welding.

6. Method according to one of the preceding claims, in which an auxiliary welding ring (50) is arranged on the inside of the end of the hollow portion (31) of the axle body (3), the auxiliary welding ring (50) protruding beyond the end, after which the end of the axle body (2) is arranged over the
protruding portion of the auxiliary welding ring (50) and the axle stub (3) is secured to the end of the axle body (2) by welding.

## Patentansprüche

1. Verfahren zur Herstellung eines Achskörpers (2), welcher an den Enden mit Achsschenkeln (3) versehen ist,
**gekennzeichnet durch** die folgenden Schritte:
- zunächst Verformen eines im Wesentlichen geraden, rohrförmigen Achskörpers zur Ausbildung eines gekrümmten Achskörpers (2),
- anschließend Aufweiten der Endbereiche (2a) an den Enden des Achskörpers (2) zur Herstellung von Endbereichen (2a) mit einem kreisförmigen Querschnitt mit einem Innen- und einem Außendurchmesser (Di, Do),
- anschließend Anlegen der jeweiligen Achsschenkel (3) an die jeweiligen Enden des gekrümmten Achskörpers (2), wobei die Achsschenkel (3) mit einem hohlen Abschnitt (31) versehen sind, der an das Ende des Achskörpers (2) anzulegen ist und einen Innen- bzw. Außendurchmesser aufweist, welche im Wesentlichen dem Innendurchmesser (Di) und dem Außendurchmesser (Do) des aufgeweiteten Endbereichs (2a) des Achskörpers (2) entsprechen, und
- abschließend allseitiges Befestigen des Achsschenkels (3) am Ende des Achskörpers (2) mittels Laserschweißen.

2. Verfahren nach Anspruch 1, wobei die Achse mittels Bördeln aufgeweitet wird.

3. Verfahren nach Anspruch 1 oder 2, wobei der Endbereich (2a) des Achskörpers (2) bis zu einem Innen- bzw. Außendurchmesser (Di, Do) aufgeweitet wird, die denjenigen des verbleibenden Achskörpers (2) entsprechen.

4. Verfahren nach Anspruch 1 oder 2, wobei der Endbereich (2a) des Achskörpers (2) bis zu einem Innen- bzw. Außendurchmesser (Di, Do) aufgeweitet wird, die größer sind als diejenigen des verbleibenden Achskörpers (2).

5. Verfahren nach einem der vorangegangenen Ansprüche, wobei ein Hilfsschweißring (50) auf der Innenseite des Endes des Achskörpers (2) angeordnet ist, wobei der Hilfsschweißring (50) über das Ende hinausragt, wonach der hohle Abschnitt (31) des Achsschenkels (3) über dem hinausragenden Abschnitt des Hilfsschweißrings (50) angeordnet und der Achsschenkel (3) mittels Schweißen an dem Ende des Achskörpers (2) befestigt ist.

6. Verfahren nach einem der vorangegangenen Ansprüche, wobei ein Hilfsschweißring (50) auf der Innenseite des Endes des hohlen Abschnitts (31) des Achskörpers (3) angeordnet ist, wobei der Hilfsschweißring (50) über das Ende hinausragt, wonach das Ende des Achskörpers (2) über dem hinausragenden Abschnitt des Hilfsschweißrings (50) angeordnet und der Achsschenkel (3) mittels Schweißen an dem Ende des Achskörpers (2) befestigt ist.

## Revendications

1. Procédé pour fabriquer un corps d'essieu (2) qui est doté de fusées (3) aux extrémités, **caractérisé par** les étapes suivantes consistant à :
tout d'abord, déformer un corps d'essieu tubulaire sensiblement droit afin de former un corps d'essieu (2) courbé ;
ensuite, expanser les régions d'extrémité (2a) aux extrémités du corps d'essieu (2) afin de produire des régions d'extrémité (2a) ayant une section transversale circulaire avec un diamètre interne et un diamètre externe (Di, Do) ;
placer ensuite les fusées (3) respectives contre les extrémités respectives du corps d'essieu (2) courbé, lesquelles fusées (3) sont dotées d'une partie creuse (31) qui doit être placée contre l'extrémité du corps d'essieu (2) et a un diamètre interne et un diamètre externe qui correspondent sensiblement aux diamètres interne (Di) et externe (Do) de la région d'extrémité (2a) expansée du corps d'essieu (2), et
fixer ensuite la fusée (3) sur l'extrémité du corps d'essieu (2) sur tous les côtés par soudage au laser.

2. Procédé selon la revendication 1, dans lequel l'essieu est expansé par évasement.

3. Procédé selon la revendication 1 ou 2, dans lequel la région d'extrémité (2a) du corps d'essieu (2) est expansée jusqu'à un diamètre interne et un diamètre externe (Di, Do) qui correspondent à ceux du reste du corps d'essieu (2).

4. Procédé selon la revendication 1 ou 2, dans lequel la région d'extrémité (2a) du corps d'essieu (2) est expansée jusqu'à un diamètre interne et un diamètre externe (Di, Do) qui sont supérieurs à ceux du reste du corps d'essieu (2).

5. Procédé selon l'une quelconque des revendications précédentes, dans lequel un anneau de soudage auxiliaire (50) est agencé sur l'intérieur de l'extrémité du corps d'essieu (2), l'anneau de soudage auxiliaire (50) faisant saillie au-delà de l'extrémité, après quoi la partie creuse (31) de la fusée (3) est agencée sur la partie en saillie de l'anneau de soudage auxiliaire (50) et la fusée (3) est fixée à l'extrémité du corps d'essieu (2) par soudage.

6. Procédé selon l'une quelconque des revendications précédentes, dans lequel un anneau de soudage auxiliaire (50) est agencé sur l'intérieur de l'extrémité de la partie creuse (31) du corps d'essieu (3), la bague de soudage auxiliaire (50) faisant saillie au-delà de l'extrémité, après quoi l'extrémité du corps d'essieu (2) est agencée sur la partie en saillie de l'anneau de soudage auxiliaire (50) et la fusée (3) est fixée sur l'extrémité du corps d'essieu (2) par soudage.
